**Europäisches Patentamt**

**European Patent Office**

**Office européen des brevets**

(19)

(11) Veröffentlichungsnummer: **0 305 425**
**B1**

(12) **EUROPÄISCHE PATENTSCHRIFT**

(45) Veröffentlichungstag der Patentschrift: **14.11.90**

(51) Int. Cl.⁵: **G 01 N 29/04**, G 01 N 27/90

(21) Anmeldenummer: **88901836.2**

(22) Anmeldetag: **26.02.88**

(86) Internationale Anmeldenummer:
**PCT/EP88/00140**

(87) Internationale Veröffentlichungsnummer:
**WO 88/07195 22.09.88 Gazette 88/21**

(54) **PRÜFKOPF UND VERFAHREN ZUM FERTIGEN EINES SOLCHEN PRÜFKOPFES.**

(30) Priorität: **16.03.87 DE 3708454**

(43) Veröffentlichungstag der Anmeldung:
**08.03.89 Patentblatt 89/10**

(45) Bekanntmachung des Hinweises auf die
Patenterteilung:
**14.11.90 Patentblatt 90/46**

(84) Benannte Vertragsstaaten:
**DE FR GB IT SE**

(56) Entgegenhaltungen:
**EP-A-0 057 068**
**FR-A-2 282 112**
**US-A-3 837 202**
**US-A-4 328 708**

(73) Patentinhaber: **Institut Dr. Friedrich Förster
Prüfgerätebau GmbH & Co. KG
Postfach 1564 In Laisen 70
D-7410 Reutlingen 1 (DE)**

(72) Erfinder: **HÄBERLEIN, Peter
Oferdinger Str. 23
D-7410 Reutlingen 24 (DE)**

Courier Press, Leamington Spa, England.

## Beschreibung

Die Erfindung betrifft einen Prüfkopf zum Abtasten der Oberflächen von zu prüfendem Halbzeug gemäß dem Oberbegriff von Anspruch 1. Dabei soll es sich vorzugsweise um einen Prüfkopf handeln, der in einem Rotierkopf eingesetzt ist und innerhalb des letzteren eine spiralige Abtastbewegung um die Achse des in allgemeinen zylindrischen langgestreckten Prüfgutes ausfährt. Im Rahmen der Erfindung können Prüfsonden der zerstörungsfreien Werkstoffprüfung von beliebiger Art zum Einsatz kommen. Die Erfindung betrifft ferner ein Verfahren zum Fertigen eines solchen Prüfkopfes.

Ein Prüfkopf der beschriebenen Gattung ist u.a. bekannt aus DE-OS 28 47 716. In der genannten Druckschrift ist ein solcher Prüfkopf in einem Streuflußrotierkopf eingesetzt und rotiert dort gemeinsam mit einem Magnetjoch um das zu prüfende Rundmaterial. Der Systemhebel des Prüfkopfes führt hier eine Drehbewegung um eine parallel zur Prüfgutachse verlaufende Drehachse aus, wenn der Sondenträger durch Durchmesserschwankungen oder Unebenheiten des Prüfgutes ausgelenkt wird. Ebenso sind natürlich auch Drehbewegungen um anders gerichtete Drehachsen denkbar. Prüfköpfe dieser Art sind im allgemeinen hohen Belastungen ausgesetzt. Man stößt daher schnell auf schwer überwindliche Grenzen, wenn man Weiterentwicklungen in Richtung auf höhere Umlaufgeschwindigkeit des Rotierkopfes und/oder auf höhere Durchlaufgeschwindigkeit des Prüfgutes betreiben will. Das bekanntermaßen vorgesehene Gegengewicht am hinteren Hebelarm des Systemhebels vermag dabei nur quasistatisch wirkende Kräfte auszugleichen. Bei den gewünschten hohen Geschwindigkeiten (10 m/sec und mehr), mit denen die Oberfläche des Prüfgutes abzutasten ist, muß der Sondenträger und mit ihm der Systemhebel der Kontur und den Unebenheiten der Oberfläche sehr schnell folgen. Dem wirken entgegen das Trägheitsmoment und mit ihm die Masse der verwendeten Bauteile. Beim Einlauf des Prüfgutes in den Bereich des Prüfkopfes treten mit zunehmender Durchlaufgeschwindigkeit des Prüfgutes steigende Kräfte auf, wenn das Prüfgut in Berührung mit der Gleitfläche des Sondenträgers kommt. Das gleiche gilt natürlich in entsprechendem Sinne für den Auslauf des Prüfgutes. Dem wird Rechnung getragen durch Auflauf- und Ablaufschrägen am Sondenträger. Aus geometrischen Gründen kann der Winkel dieser Schrägen jedoch nicht beliebig klein gewählt werden. Bei entsprechend hohen Geschwindigkeiten treten daher im Augenblick des Ein- und Auslaufs sehr starke Kräfte auf, die unter anderem von Trägheitsmoment und somit von der Masse der verwendeten Bauteile abhängen. Aus dem Gesagten ergeben sich zwei sich widersprechende Forderungen. Zum einen sollte die Masse der verwendeten Bauteile drastisch verringert werden, zum anderen sollte deren Festigkeit ausreichen, die genannten hohen Kräfte aufzunehmen. Eine dritte Forderung kommt noch hinzu. Schwingungen, die bei den impulsartig auftretenden Kräften leicht angeregt werden können, müssen weitgehend vermieden werden.

Die Erfindung macht sich diese Forderungen zu eigen und stellt sich einen Prüfkopf der im Oberbegriff von Anspruch 1 definierten Art sowie ein Verfahren zur Herstellung dieses Prüfkopfes zur Aufgabe, der neben einer geringen Masse gute Festigkeits- und Dämpfungswerte aufweisen soll.

Diese Aufgabe wird gelöst durch die Merkmale des kennzeichnenden Teils der Ansprüche 1 und 9.

Die guten Eigenschaften des erfindungsgemäßen Prüfkopfes sollen an einem Beispiel verdeutlicht werden. Bei einem ausgeführten Prüfkopf für Rundmaterial bis zu 65 mm Durchmesser weist das tragende Bauteil, der Systemhebel, ohne Einbauteile eine Masse von weniger als 50 g auf. Das Biegemoment mit einem Abstand des Drehpunktes von der Befestigung des Sondenträgers beträgt 1500 Ncm bei einer Durchbiegung von 0,05 cm. Zu diesen hervorragenden Eigenschaften kommt noch ein besonderer Vorteil hinzu. Der den Sondenträger aufnehmende vordere Hebelarm weist durch seine Gestaltung eine gewisse Elastizität auf. Diese ermöglicht es, daß sehr schnelle kleine Bewegungen des Sondenträgers, hervorgerufen durch kleine Unebenheiten in der abzutastenden Oberfläche, vom vorderen Hebelarm aufgefangen werden, ohne daß der hintere Hebelarm und gegebenenfalls das Gegengewicht die Bewegung mitmachen. Bei den herkömmlichen metallischen Werkstoffen wäre eine solche Gestaltung mit einer unzulässig hohen Neigung zu mechanischen Schwingungen verbunden gewesen. Diese werden hier durch die hohe Dämpfung des verwendeten Materiales vermieden. Die Gestaltung des vorderen Hebelarmes macht es zusätzlich möglich, daß zumindest ein Teil des Einlauf- und Auslaufimpulses als Torsionsbewegung vom Hebelarm aufgenommen wird, wobei wiederum die hohe Dämpfung des Materiales das Entstehen von Torsionsschwingungen verhindert. Die Länge dieses Bereiches einer gewissen Elastizität am vorderen Hebelarm soll vergleichbar klein sein gegenüber der wirksamen Länge des Hebelarmes. Nach einer Ausgestaltung der Erfindung soll das Verhältnis der genannten Längen bei 1/4 liegen. Unmittelbar anschließend an den genannten Bereich soll das Widerstandsmoment steil ansteigen, was durch eine entsprechende Formgebung erreicht wird. Noch weitere vorteilhafte Ausgestaltungen der Erfindung, soweit sie den erfindungsgemäßen Prüfkopf betreffen, sind in den Unteransprüchen 2—8 festgehalten.

Das erfindungsgemäße Verfahren ermöglicht eine einfache und genau reproduzierbare Fertigung des erfindungsgemäßen Prüfkopfes in einer fortschrittlichen Technologie. In Ausgestaltung dieser Technologie wird angegeben, wie in einfacher kostensparender Weise eine Anzahl von Systemhebeln des Prüfkopfes gleichzeitig hergestellt werden können. Eine weitere Ausgestaltung der genannten Technologie zeigt, wie Schwierigkeiten beim Auftrennen in einzelne Systemhebel überwunden werden können.

Im folgenden soll nun die Erfindung durch mehrere Figuren an Hand eines Ausführungsbeispieles näher erläutert werden. Es zeigen im einzelnen:

Figur 1 einen Prüfkopf
Figur 2 den Prüfkopf in Seitenansicht
Figur 3 einen Schnitt durch denselben
Figur 4 einen Systemhebel des Prüfkopfes
Figur 5 und 6 Bauteile des letzteren
Figuren 7 bis 9 eine Preßform zum Herstellen von Systemhebeln.

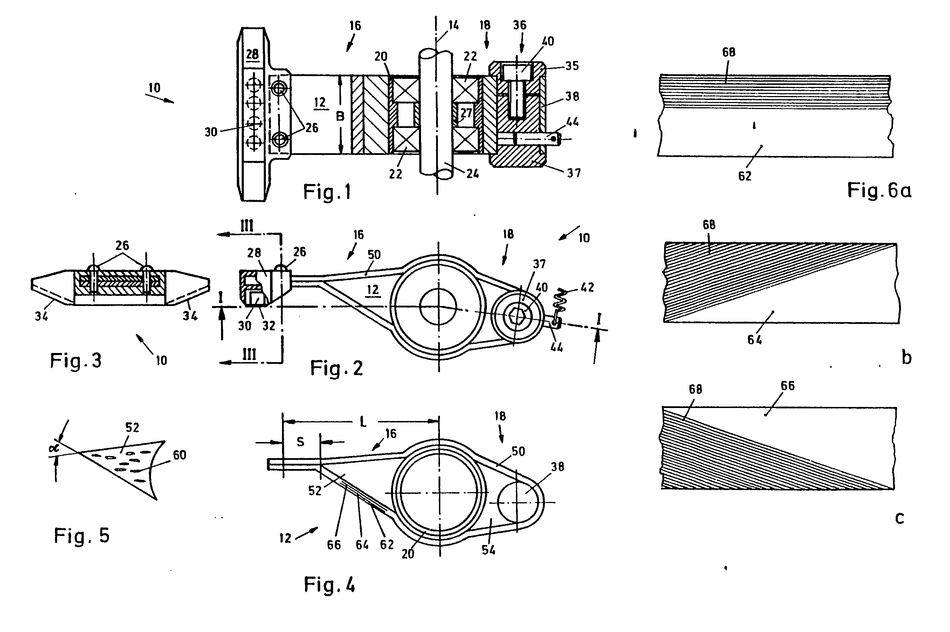

In Figur 1 ist ein Prüfkopf 10 nach einem Schnitt entlang einer Linie I—I dargestellt. Figur 2 zeigt denselben Prüfkopf 10 in Seitenansicht, Figur 3 in einem Schnitt entlang einer Linie III—III. Hauptbestandteil des Prüfkopfes 10 ist ein Systemhebel 12, der um eine Achse 14 drehbar ist und einen vorderen (16) und einen hinteren Hebelarm 18 besitzt. Eine Lagebuchse 20, die im Systemhebel 12 fest verankert ist, trägt zwei Lager 22, die um eine Welle 24 laufen und die sich wellenseitig mit einer Abstandshülse 27 gegeneinander abstützen. Am vorderen Hebelarm 16 ist mittels zweier Schrauben 26 ein Sondenträger 28 befestigt, der vorzugsweise aus einer Leichtmetallegierung hergestellt ist und in den vier Prüfsonden 30 eingebaut sind. Die Unterseite des Sondenträgers 28, die im Betriebsfall auf der Prüfgutoberfläche schleifen kann, ist mit einer verschleißfesten Schicht 32 bewehrt, die z.B. aus Siliziumkarbonat bestehen kann. Zum Auf- und Abgleiten am Prüfgut besitzt der Sondenträger zwei Gleitschrägen 34, die ebenfalls durch eine verschleißfeste Bewehrung geschützt sind. Am hinteren Hebelarm 18 ist ein zweiteiliges Ausgleichsgewicht 36 angebracht. Seine beiden Teile 35 und 37 sind in einer zylindrischen Öffnung 38 des Systemhebels 12 gehalten und werden von einer Schraube 40 zusammengehalten. Zweck des Ausgleichsgewichtes 36 ist es, für einen weitgehenden Ausgleich der beiden entgegengesetzt gerichteten Drehmomente beiderseits der Drehachse 14 zu sorgen, insbesondere unter dem Einfluß der Zentrifugalkraft, wenn der Prüfkopf in einem Rotierkopf eingesetzt ist. In diesem Falle gibt man häufig dem Ausgleichsgewicht 36 ein leichtes Übergewicht, sodaß mit steigender Drehzahl ein wachsender zusätzlicher Andruck des Sondenkopfes 10 auf die Oberfläche des Prüfgutes stattfindet. Damit auch bei ruhendem Rotierkopf ein Andruck des Sondenträgers vorliegt, ist eine Zugfeder 42 vorgesehen, die über einen Bolzen 44 am hinteren Hebelarm 18 angreift.

In Figur 4 ist der Systemhebel 12 zum besseren Verständnis seines Aufbaues noch einmal alleine dargestellt. Die äußere Kontur des Systemhebels 12 wird bestimmt durch eine Schlaufe 50 aus faserverstärktem Kunststoff. Diese umfaßt Zwickelstücke 52, 54, die Lagerbuchse 20 und die Öffnung 38. An der Spitze des Zwickelstückes 52 sind die beiden Enden der Schlaufe 50 zusammengeführt zu einer Doppellage des Schlaufenmaterials. Über eine Strecke S vom Befestigungspunkt des Sondenträgers bis zum Punkt der Zusammenführung der Schlaufenenden ergibt sich ein Bereich einer gewissen Elastizität. Die Strecke S dieses Bereiches entspricht etwa 1/4 der Strecke L zwischen dem Befestigungspunkt des Sondenträgers und der Drehachse 14. Man erreicht auf diese Weise eine optimale Aufnahme durch den Systemhebel 12 einerseits der Biegekräfte, die von schnellen kleinen Bewegungen des Sondenträgers 12 beim Abtasten des Prüfgutes herrühren, andererseits der torsionalen Kräfte, die vom Ein- und Auslaufimpuls ausgelöst werden. Im Anschluß an die Strecke S einer gewissen Elastizität soll das Widerstandsmoment rasch ansteigen. Dazu verbreitert sich das Zwickelstück 52, das in Figur 5 gesondert abgebildet ist, mit einem Öffnungswinkel von etwa 40°. Die Zwickelstücke 52 und 54 bestehen aus vorgepreßtem expandierbarem Hartschaumkunststoff, z.B. aus Polymethacrylimid. Damit werden hohe Festigkeits- und Dämpfungswerte bei gleichzeitig extrem geringer Masse erreicht. Die beim Vorpressen flachgedrückten Poren 60 sollen so ausgerichtet sein, daß sie etwa parallel zur Drehachse 14 verlaufen. Die Schlaufe 50 besteht vorzugsweise aus kohlestoffaserverstärktem Kunststoff, sogenanntem CFK-Material bei dem Kohlestoffasern in aushärtbarem Kunststoff gebettet sind. Die gewünschte Stärke der Schlaufe 52 wird realisiert durch Aufeinanderlegen mehrerer, im vorliegenden Fall dreier Matten 62, 64, 66 aus CFK-Material, sogenannter Prepregs. Diese sind in Figur 6 noch einmal einzeln dargestellt. Dabei läßt sich erkennen, daß die Kohlestoffasern 68 unterschiedlich ausgerichtet sind. Bei Prepreg 62 sind sie in Längsrichtung des Prepregs und damit der Schlaufe 50 ausgerichtet. Auf diese Weise erhält man eine hohe Steifigkeit in Längsrichtung. Die Kohlestoffasern 68 der Prepregs 64, 66 sind in entgegengesetzt gleichen Winkeln schräg zur Längsrichtung ausgerichtet. Dies gewährleistet eine hohe Steifigkeit in Querrichtung.

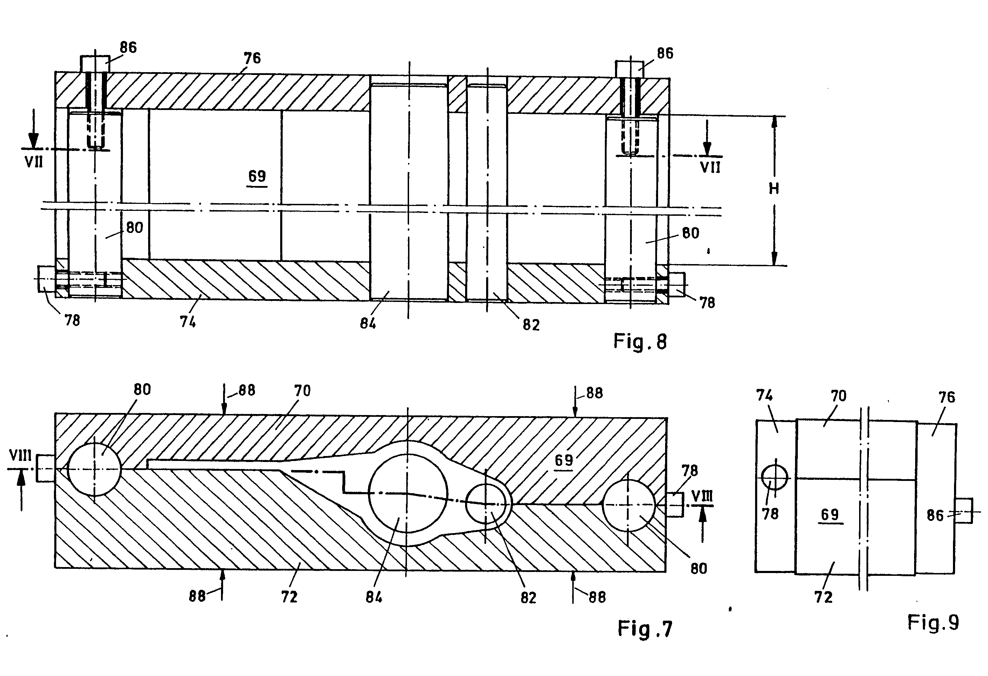

Die Figuren 7 bis 9 zeigen eine Preßform 69 zur Herstellung des Systemhebels 12 und zwar Figur 7 in einem Schnitt entlang der Linie VII—VII, Figur 8 in einem Schnitt entlang der Linie VIII—VIII und Figur 9 in Vorderansicht. Die Form 69 besteht im wesentlichen aus zwei Formplatten 70, 72 sowie einer Grundplatte 74 und einer Deckplatte 76. An der Grundplatte 74 sind mittels Schrauben 78 Führungsbolzen 80 befestigt, die eine genaue gegenseitige geometrische Zuordnung der beiden Formteile 70, 72 bewirken. Die Höhe H der Formplatten 70, 72 beträgt je nach der gewünschten Zahl von Systemhebeln 12 ein entsprechendes Vielfaches der Breite B eines einzelnen Systemhebels mit einem Zuschlag für die notwendigen Trennschnitte.

Beim Herrichten der Form 69 geht man wie folgt vor. In die Grundplatte 74 werden zusätzlich zu den schon genannten Führungsbolzen 80 ein Kernbolzen 82 zum Freihalten der Öffnung 38 und ein Positionierungsbolzen 84 eingesteckt. Anstatt den letzteren mit einer Buchse der Länge H zu bestücken, die dann später beim Auftrennen in einzelne Systemhebel 12 mit durchzutrennen wäre, reiht man abwechselnd vorbereitete Lagerbuchsen 20 und Kunststoffringe z.B. aus Hartpapier oder Hartgewebe mit der Breite des Trennschnittes auf den Positionierbolzen 84 auf. Man trägt dabei dem Umstand Rechnung, daß es sehr schwierig ist, Metallteile und solche aus CFK-Material, die untereinander in Verbindung stehen, mit einer Trennscheibe durchzusägen, da jeder der genannten Werkstoffe eine besondere. Trennscheibe erfordert. Sodann schiebt man ein vorgefertigtes Zwickelstück 54 der Länge H zwischen den beiden Bolzen 82 und 84 und schließt die Deckplatte 76, wobei man jedoch zwei zum Festziehen der Formplatte 76 vorgesehene Schrauben 86 zunächst nur lose anzieht. Nun werden drei Prepregs 62, 64, 66, die in der Breite H und einer Orientierung der Fasern gemäß den Figuren 6a—c hergerichtet sind, zwischen die Bolzen 82, 84 und den vorgesehenen Raum auf Formplatte 70 eingeschoben. Nach Einlegen des Zwickelstükkes 52 der Länge H kann man die Prepregs 62, 64, 66 umklappen. Die Form 69 wird geschlossen durch Aufschieben der Formplatte 72 und Anziehen von Schraubzwingen (nicht dargestellt) in Richtung der Pfeile 88 sowie durch Festziehen der Schrauben 86. Anschließend bringt man die Form 69 auf die zum Aushärten der Prepregs und des Hartschaumkunststoffes erforderliche Temperatur von ca. 150° C. Bei einer solchen Temperatur sind die Zwickelstücke 52, 54 bestrebt, sich wieder auf ihre ursprüngliche Form, die sie vor dem Vorpressen eingenommen hatten, auszudehnen. Die dabei freiwerdenden Kräfte wirken senkrecht zur Flachseite der Poren 60. Dadurch werden die Prepregs 62, 64, 66 mit großem Druck zusammen- und an die Wand der Form 69 gepreßt. Das wiederum hat eine innige Verbindung der Prepregs 62, 64, 66 untereinander und mit den Zwickelstücken 52, 54 zur Folge. Ein starker Andruck erfolgt auch auf die Außenwände der Lagerbuchsen 20, die in gerändelter Ausführung erstellt worden sind und sich so unverrückbar in den Zwickelstücken 52, 54 und den Prepregs 62, 64, 66 verankern. Nach erfolgter Aushärtung werden die Bolzen 82, 84 herausgeschlagen und wird die Form 69 geöffnet. Das Formteil kann nun entnommen und in einzelne Systemhebel 12 aufgetrennt werden.

**Patentansprüche**

1. Prüfkopf zum Abtasten der Oberfläche von zu prüfendem Halbzeug, bestehend aus einem Systemhebel (12) mit einem vorderen (16) und einem hinteren (18) Hebelarm, einer die Drehachse (14) des Systemhebels definierenden Lageranordnung (22—26), einem mindestens eine Prüfsonde (30) enthaltenden Sondenträger (28), der am vorderen Hebelarm befestigt ist, dadurch gekennzeichnet, daß der Systemhebel (12) eine Schlaufe (50) aus faserverstärktem Kunststoff wie z.B. Kohlestoffaserkunststoff (CfK) aufweist, die die Konturen des Systemhebels (12) bildet, die die Lageranordnung (22—26) wie auch Zwickelstücke (52, 54) in den verbleibenden Zwischenräumen umfaßt und deren beide Enden am vorderen Hebelarm (16) parallel zusammengeführt sind.

2. Prüfkopf nach Anspruch 1, dadurch gekennzeichnet, daß die Schlaufe (50) aus mehreren aufeinander liegenden Matten (62, 64, 66) von in aushärtbarem Kunststoff eingebetteten Fasern, sog. Prepregs, zusammengesetzt ist.

3. Prüfkopf nach Anspruch 2, dadurch gekennzeichnet, daß die Fasern (68) der aufeinander liegenden Matten (62, 64, 66) jeweils in unterschiedlichen Richtungen orientiert sind.

4. Prüfkopf nach Anspruch 3, dadurch gekennzeichnet, daß die Fasern mindestens einer Matte (62) in Umfangsrichtung der Schlaufe (50) verlaufen und die Fasern der Matten (64, 66) mindestens eines Paares von Matten in sich kreuzenden Richtungen orientiert sind, die symmetrisch zur Umfangsrichtung der Schlaufe (50) liegen.

5. Prüfkopf nach einem der vorhergehenden Ansprüche, dadurch gekennzeichnet, daß die Zwickelstücke (52, 54) aus vorgepreßtem expandierbarem Hartschaumstoff z.B. aus Polymethacrylimid bestehen.

6. Prüfkopf nach Anspruch 5, dadurch gekennzeichnet, daß die Poren (60) des Hartschaumkunststoffes mit ihrer Flachseite parallel zur Drehachse (14) des Systemhebels (12) ausgerichtet sind.

7. Prüfkopf nach einem der vorhergehenden Ansprüche, dadurch gekennzeichnet, daß die Teillänge S der beiden zusammengeführten Enden der Schlaufe (50) bis zum Befestigungspunkt des Sondenträgers (28) am Systemhebel (12) etwa 1/4 der Strecke L zwischen der Drehachse (14) des Systemhebels (12) und dem genannten Befestigungspunkt ausmacht.

8. Prüfkopf nach einem der vorhergehenden Ansprüche, dadurch gekennzeichnet, daß das am vorderen Hebelarm (16) eingeschlossene Zwickelstück (52) sich mit einem Winkel α von 15—40° öffnet.

9. Verfahren zum Fertigen eines Prüfkopfes gemäß Anspruch 1 durch Herstellen des Systemhebels (12) in einer druckfesten Preßform (69), dadurch gekennzeichnet, daß aus mehreren Matten (62, 64, 66) von in aushärtbarem Kunststoff eingebetteten Fasern (68), sogenannten Prepregs, eine Schlaufe (50) gebildet und in die Form (69) eingelegt wird, daß ein Einsatz (20) für die Lageranordnung (20—6) und gegebenenfalls Kerne (82) für andere frei zu haltenden Öffnungen des Systemhebels (38) mit fixierter Positionierung in die Form (69) eingesetzt werden, daß in die Zwischenräume zwischen Schlaufe (50) einerseits, Einsatz (20) und Kernen (82) andererseits Zwickelstücke (52, 54) aus expandierbarem aushärtbarem Hartschaumkunststoff eingelegt werden, daß die Form geschlossen und anschließend auf die für die Aushärtung der Prepregs und des Hartschaumkunststoffes geeignete Temperatur gebracht wird.

10. Verfahren nach Anspruch 9, dadurch

gekennzeichnet, daß in eine entsprechende Form (69) Schlaufe (50), Zwickelstücke (52, 54) und Kerne (82) in der mehrfachen Breite eines herzustellenden Systemhebels (12) eingelegt werden, daß für jeden herzustellenden Systemhebel (12) entsprechende Einsätze (20) in der Form (69) positioniert werden und daß nach erfolgter Härtungdas Formgut in einzelne Systemhebel (12) aufgetrennt wird.

11. Verfahren nach Anspruch 10, dadurch gekennzeichnet, daß neben jedem metallischen Einsatz (20) an der vorgesehenen Trennstelle eine Zwischenscheibe aus Kunststoff in die Form eingelegt wird.

## Revendications

1. Tête de contrôle pour examiner la surface supérieure de demi-roduits à contrôler, constituée d'un levier de système (12), comportant un bras de levier antérieur (16) et un bras de levier postérieur (18), un ensemble de paliers (22—26) définissant l'axe de rotation (14) du levier de système, un porte-sonde (28), fixé sur le levier antérieur et contenant au moins une sonde de contrôle (30), caractérisée en ce que le levier de système (12) présente une boucle fermée (50) en matière plastique renforcée par des fibres, comme par exemple de la matière plastique à fibres de carbone (CfK), qui forme les contours du levier de système (12), qui entoure l'ensemble de paliers (22—26) ainsi que des pièces de gousset (52, 54) dans les espaces restant libres et dont les deux extrémités sont assemblées parallèlement sur le levier antérieur (16).

2. Tête de contrôle suivant la revendication 1, caractérisée en ce que la boucle fermée (50) est constituée de l'assemblage de plusieurs nattes (62, 64, 66), placées les unes sur les autres, de lits de fibres en matière plastique thermodurcissable, connue sous le nom de prepegs.

3. Tête de contrôle suivant la revendication 2, caractérisée en ce que les fibres (68) des nattes (62, 64, 66), placées les unes au dessus des autres, sont chaque fois orientées dans des directions différentes.

4. Tête de contrôle suivant la revendication 3, caractérisée en ce que les fibres d'au moins une natte (62) sont dirigées suivant la direction de la périphérie de la boucle (50) et en ce que les fibres des nattes (64, 66) d'au moins un couple de nattes sont orientées dans des directions se croisant, qui sont disposées symétriquement par rapport à la direction périphérique de la boucle (50).

5. Tête de contrôle suivant l'une quelconque des revendications précédentes, caractérisée en ce que les pièces de gousset (52, 54) sont constituées de mousse expansée durcie ébauchée à la presse, par exemple en polymétacrylimide.

6. Tête de contrôle suivant la revendication 5, caractérisée en ce que les pores (60) de la mousse de matière plastique durcie sont, avec leur face aplatie, dirigés sensiblement parallèlement à l'axe de rotation (14) du levier de système (12).

7. Tête de contrôle suivant l'une quelconque des revendications précédentes, caractérisée en ce que la partie de longueur S des deux extrémités se rejoignant de la boucle (50) jusqu'au point de fixation du porte-sonde (28) sur le levier de système (12) correspond sensiblement à 1/4 du segment de longueur L compris entre l'axe de rotation (14) du levier de système (12) et le point de fixation qui vient d'être cité.

8. Tête de contrôle suivant l'une quelconque des revendications précédentes, caractérisée en ce que la pièce de gousset (52) incluse dans le bras de levier antérieur (16) s'ouvre suivant un angle α de 15 à 40°.

9. Procédé de fabrication d'une tête de contrôle suivant la revendication 1, par exécution du levier de système (12) dans un moule de pressage (69) résistant à la pression, caractérisé en ce qu'une boucle (50) est réalisée à partir de nattes (62, 64, 66) de fibres en matière plastique thermodurcissable, placées en lit, et est mise dans le moule (69), en ce qu'un insert (20) pour l'ensemble de paliers (20—26) et, le cas échéant, des noyaux (82) pour d'autres ouvertures (38) à maintenir libres du levier de système (12) sont placés en position fixe dans le moule (69), en ce que des pièces de gousset (52, 54) en mousse de matière plastique expansée thermodurcissable sont placées dans les espaces intercalaires entre la boucle (50) d'une part, l'insert (20) et les noyaux (82) d'autre part, en ce que le moule est fermé et ensuite porté à la température nécessaire au durcissement des prépegs et de la mousse de matière plastique dure.

10. Procédé suivant la revendication 9, caractérisé en ce que boucle (50), des pièces de goussett (52, 54) et noyaux (82) sont mis en place dans un moule correspondant (69) avec une épaisseur représentant plusieurs fois celle du levier de système (12), en ce que, pour chaque levier de système (12) à fabriquer, des inserts (20) correspondants sont positionnés dans le moule (69) et en ce qu'après avoir obtenu le durcissement, le produit moulé est débité en leviers unitaires de système (12).

11. Procédé suivant la revendication 10, caractérisé en ce qu'à côté de chaque insert métallique (20), on a placé dans le moule, aux positions de tronçonnage prévues, une bague intercalaire en matière plastique.

## Claims

1. A test head for scanning the surface of a semi-product under test comprising a system lever (12) having a front lever arm (16) and a rear lever arm (18), a bearing assembly (22 to 26) defining the axis of orientation (14) of the system lever, and a sensor carrier (28) which carries at least one sensor (30) and which is secured to the front lever arm, characterised in that the system lever (12) comprises a loop (50) of fibre reinforced plastics, as for example carbon fibre plastics material (CfK), which defines the contours of the system lever (12), the loop securing the bearing arrangement (22 to 26) and also, in the remaining interior space, wedge elements (52, 54) with both ends of the loop extending in mutual parallel contact in the front lever arm (16).

2. A test head according to Claim 1, characterised in that the loop (50) comprises a plurality of mats (62, 64, 66) overlying each other and being so-called "prepregs" of fibres embedded in hardened plastics material.

3. A test head according to Claim 2, characterised in that the fibres (68) of the respective mutually overlying mats (62, 64, 66) are orientated in different directions.

4. A test head according to Claim 3, characterised in that the fibres of at least one mat (62) extend in the circumferential direction of the loop (50), and the fibres of the mats (64, 66) of at least one pair of mats are orientated in directions intersecting each other, which lie symmetrically with respect to the circumferential direction of the loop (50).

5. A test head according to one of the preceding Claims, characterised in that the wedge elements (52, 54) are made from pre-moulded, expandable hard foamed material, for example from polymethacrylimide.

6. A test head according to Claim 5, characterised in that the pores (60) of the hard foamed plastics material are of straightened form, with their flattened sides parallel to the axis of rotation (14) of the system lever (12).

7. A test head according to one of the preceding Claims, characterised in that the length S of the two ends of the loop (50), up to the point at which the sensor carrier (28) is fastened to the system lever (12), constitutes about one quarter of the distance L between the axis of rotation (14) of the system lever (12) and the said fastening point.

8. A test head according to one of the preceding Claims, characterised in that the wedge element (52) enclosed in the front lever arm (16) is divergent at an angle α of 15 to 40 degrees.

9. A method of making a test head according to Claim 1 in which the system lever (12) is formed in a high-pressure mould, characterised in that a loop is formed from a plurality of mats (62, 64, 66), so-called "prepregs", of fibres (68) embedded in hardened plastics material, and is laid in the mould (69); in that an insert (20) for the bearing arrangement (20 to 26), and, if necessary, cores (82) for keeping open other apertures (38) of the system lever, are placed in the mould (69) in fixed positions; in that wedge elements (52, 54), of expandable, hardened, hard foamed plastics material, are placed in the intermediate space between the loop (50) on one side and the insert (20) and cores (82) on the other side; and in that the mould is closed and subsequently is brought to the appropriate temperature for hardening the "prepregs" and the hard foamed plastics material.

10. A method according to Claim 9, characterised in that loops (50), wedge elements (52, 54) and cores (82) are placed in a corresponding mould (69) the width of which is a multiple of the width of a system lever (12) to be formed; in that, in respect of each system lever (12) that is to be formed, corresponding inserts (20) are positioned in the mould (69); and in that after the resulting hardening process, the moulding is stripped out in the form of separate system levers (12).

11. A method according to Claim 10, characterised in that a separator of plastics material is placed in the mould beside each metallic insert (20) at the predetermined separation points.

Fig. 6a

Fig. 1

Fig. 2

Fig. 3

Fig. 4

Fig. 5

Fig. 9

Fig. 8

Fig. 7